Europäisches Patentamt

European Patent Office

Office européen des brevets

(11) Veröffentlichungsnummer: **0 428 841 A1**

## (12) EUROPÄISCHE PATENTANMELDUNG

(21) Anmeldenummer: **90117235.3**

(22) Anmeldetag: **07.09.90**

(51) Int. Cl.5: **B23K 7/00, B23K 7/10**

(30) Priorität: **19.10.89 DE 3934822**

(43) Veröffentlichungstag der Anmeldung:
**29.05.91 Patentblatt 91/22**

(84) Benannte Vertragsstaaten:
**AT BE CH DE ES FR GB GR IT LI NL SE**

(71) Anmelder: **Wegmann & Co. GmbH**
**August-Bode-Strasse 1**
**W-3500 Kassel(DE)**

(72) Erfinder: **Hahn, Hans Joachim**
**Ölmühle**
**W-301 Emstal 2(DE)**

(74) Vertreter: **Feder, Wolf-Dietrich et al**
**Dr. Wolf-D. Feder, Dr. Heinz Feder Dipl.-Ing.**
**P.-C. Sroka Dominikanerstrasse 37**
**W-4000 Düsseldorf 11(DE)**

(54) **Wassertisch für Brennschneidmaschine mit Unterwasser-Plasmaschneidanlage, insbesondere für Aluminium-Verarbeitung.**

(57) Ein Wassertisch für eine Brennschneidmaschine mit Unterwasser-Plasmaschneidanlage, insbesondere für AluminiumVerarbeitung, mit einer in einem Wasserbehälter (1) angeordneten Schneidgutauflage (1.5). Der Wasserbehälter (1) besitzt in Längsrichtung verlaufende Seitenwände, die schräg nach innen abfallen. Am Boden des Wasserbehälters (1) verläuft in Längsrichtung eine Förderrinne (1.4), in der ein Plattenbandförderer (2) angeordnet ist, der in Bewegungsrichtung seines Obertrums (2.1) durch die vordere Stirnwand (1.2) des Wasserbehälters (1) nach außen und dort in einem wasserdichten Tunnel (2.3) schräg nach oben zu einer Abnahmevorrichtung (2. 4-8) für Schneidrückstände geführt ist. An dem in Bewegungsrichtung des Untertrums (2.2) liegenden Ende der Förderrinne (1.4) ist eine Schlammulde (6) angeordnet, in die der sich absetzende Schlamm durch das Untertrum (2.2) gefördert wird. Eine Einrichtung zum Anheben und Absenken des Wasserspiegels besitzt ein in einem Hilfsbehälter (3) angeordnetes aufblasbares Luftkissen (4), das an eine Luftzuführungsvorrichtung angeschlossen ist. Mit dem Wassertisch ist eine rasche Abführung der Schneidrückstände möglich, so daß beim Schneiden von Aluminium die Wasserstoffbildung reduziert wird. Die Einrichtung zum Heben und Senken des Wasserspiegels ist gegen Schneidrückstände unempfindlich.

FIG. 1

Die Erfindung betrifft einen Wassertisch für eine Brennschneidmaschine mit Unterwasser-Plasmaschneidanlege, insbesondere für Aluminium-Verarbeitung, mit einer in einem Wasserbehälter angeordneten Schneidgutauflage sowie eine Einrichtung zum Anheben und Absenken des Wasserspiegels.

Die Ausbildung derartiger Wassertische wirft eine Reihe von Problemen auf, die insbesondere das Anheben und Absenken des Wasserspiegels und das Abführen der Schneidruckstände betreffen.

So hat es sich beispielsweise herausgestellt, daß insbesondere beim Plasma-Brennschneiden von Aluminium erhebliche Mengen von Wasserstoffgas entstehen können, die zu unerwünschten Verpuffungen oder gar Explosionen führen. Der Grund hierfür liegt darin, daß beim Plasma-Schneiden der zu schneidende AL-Werkstoff unter Wasser aufgeschmolzen wird und das flüssige Fugenmaterial durch die kinetische Energie des Plasma-Strahls in feinen Tröpfchen aus der Schnittfuge herausgetrieben wird. Das durch Wasserdampfspannungen aufgetriebene metallische Material sinkt als Schneidrückstand im Wasser ab und es setzt nach bekannten chemischen Zusammenhängen eine Reaktion ein, bei der Aluminiumoxid und Wasserstoff entstehen.

Bei bekannten Wassertischen wird das Anheben und Absenken des Wasserspiegels z.T. mittels Stülpluftglocken oder Luftkammern bewirkt, was beim Plasma-Brennschneiden von Aluminium infolge der oben beschriebenen Wasserstoffbildung zur Bildung von explosiven Gemischen unter den Stülpluftglocken oder in den Luftkammern führen kann, weil beim Fluten der Kammern Metallteile in diese eingeschleppt werden können.

Der Erfindung liegt die Aufgabe zugrunde, einen Wassertisch für eine Brennschneidmaschine, der insbesondere zum Plasma-Brennschneiden von Aluminium geeignet sein soll, derart auszugestalten, daß die Bildung und Ansammlung von Wasserstoffgas bzw. wasserstoffhaltigen Gasgemischen vermieden wird. Die Erfindung geht dabei von dem Grundgedanken aus, daß bei einem derartigen Wassertisch einerseits die Metallrückstände möglichst rasch und vollständig aus dem Wasserbehälter abzuführen sind und die Einrichtung zum Anheben und Absenken des Wasserspiegels derart ausgebildet sein sollte, daß sich auch in ihr keine wasserstoffhaltigen Gasgemische ansammeln können. Dabei sollte die Gesamteinrichtung möglichst einfach aufgebaut und bedienbar sein und die Rückstände (Metallrückstände, Abwasser) sollten weiterverwertbar bzw. möglichst wenig umweltbelastend abführbar sein.

Die Lösung dieser Aufgabe erfolgt erfindungsgemäß mit den Merkmalen aus dem kennzeichnenden Teil des Patentanspruchs 1.

Vorteilhafte Weiterbildungen der Erfindung sind in den Unteransprüchen beschrieben.

Der Grundgedanke der erfindungsgemäßen Lösung besteht darin, einerseits (Merkmale a - d) für eine außerordentlich rasche Abführung der Schneidrückstände zu sorgen und andererseits (Merkmal e) die Einrichtung zum Anheben und Absenken des Wasserspiegels so auszubilden, daß zwar eine Wasserverdrängung mittels Luft stattfindet, andererseits aber keine direkte Berührung zwischen dem Metallrückstände enthaltenden Wasser und der verdrängenden Luft auftritt.

Die beim Brennschneiden anfallenden Abfälle sammeln sich infolge der besonderen Querschnittsausbildung des Wasserbehälters in einem schmalen Bereich, der durch die Breite der Förderrinne gegeben ist, und die in grobkörniger Form vorliegenden Rückstände gelangen unmittelbar auf das Obertrum des Plattenbandförderers und werden kontinuierlich nach außen abgeführt. Die sich am Boden absetzenden Schlämme werden von dem in Gegenbewegung laufenden Untertrum des Plattenbandförderers in die am Ende der Förderrinne angeordnete Schlammulde geschoben und können aus dieser in gewissen Zeitabständen abgeführt werden. Mit dieser Einrichtung gelingt eine Trennung der unterschiedlich zu bewertenden Schneidabfälle. Der Sofortaustrag der Schneidrückstände verhindert Redoxreaktionen und exothermische Vorgänge und bewirkt eine Standzeiterhöhung des Beckenwassers. Weiterhin vermindert er ganz erheblich die Gefahr der Gasblasenansammlung unter dem Schneidgut. Die vom Schlamm abgetrennten grobkörnigeren Schneidgutabfälle werden als weiterverwertbarer Schrott abgeführt. Die Trennung von Schlamm und Granulat in den Schneidrückständen ist außerdem die Voraussetzung für eine Entsorgung des Beckenwassers mit einem pH-Wert von max. 9,5 und Schlammanteilen von max. 2ml/l gemäß den Kanaleinlaßbedingungen der örtlichen unteren Wasserbehörde.

Wie weiter unten anhand von Ausführungsbeispielen näher erläutert, kann das Luftkissen der Einrichtung zum Heben und Senken des Wasserspiegels entweder im Innenraum des Wasserbehälters selbst oder in besonders vorteilhafter Weise in einem Hilfsbehälter angeordnet sein, der so ausgestaltet ist, daß durch das Luftkissen die zu hebende Wassermenge entweder aus dem Hilfsbehälter verdrängt oder in ihn zurückgenommen wird. Für den erfindungsgemäßen Wassertisch verwendbare Luftkissen sind an sich bekannt. Sie bestehen aus einem Material, das gegen das Wasser im Wasserbehälter resistent ist und ihr Aufbau ist so gestaltet, daß im aufgeblähten Zustand im Inneren des Luftkissens angeordnete Haltefäden eine Äquidistanz der jeweils großflächig einander gegenüberliegenden Kissenflächen garantieren. Damit ist eine reproduzierbare geometrische Form des Luftkissens gegeben und eine unterbringung auf kleinstem Raum möglich. Der Hilfsbehälter ist bis auf eine in der Stirnwand des Wasserbehälters liegende Wasserdurchtrittsöffnung vorzugsweise allseitig geschlossen, also auch an seiner Oberseite und kann sich in Richtung auf den Wasserbehälter trichterförmig erweitern. Hierdurch wird eine besonders gute Wirksamkeit erreicht, weil keine ansonsten ungenutzte Wasserfläche oberhalb des Luftkissens angehoben zu werden braucht. Wird das Luftkissen weiterhin im Hilfsbehälter in Richtung auf den Wasserbehälter abfallend geneigt angeordnet, so wird bei Lufteinlaß das Wasser mit einer langsamen Rollbewegung aus dem Hilfsbehälter von hinten nach vorne verdrängt, was zu einer besonderen Bewegungseleganz der im Wasserbehälter auf- und absteigenden Wassermengen führt.

Auch bei dem erfindungsgemäßen Wassertisch verwendbare Plattenbandförderer sind an sich bekannt. Ihre Anwendung bei der erfindungsgemäßen Einrichtung hat den besonderen Vorzug, daß die gegenläufige Bewegung des Obertrums und des Untertrums nicht nur zur Förderung sondern auch zur Trennung der Schneidgutrückstände in großkörniges Material und Schlamm ausgenutzt wird.

Aus der am einen Ende der Förderrinne angeordneten Schlammulde kann der sich ansammelnde Schlamm in relativ kurzen Zeitabständen abgeführt werden. Es hat sich als besonders vorteilhaft erwiesen, in der Auslaßöffnung der Schlammulde ein Auslaßventil anzuordnen, das als speziell für Oxidschlämme entwickeltes Kugelventil ausgebildet ist. Es hat sich gezeigt, daß durch dieses in den weiter unten dargestellten Ausführungsbeispielen näher erläuterte Kugelventil auch verdichtete und stark haftende pastöse Schlämme nahezu mit Wandungsströmung wirkungsvoll ausgetragen werden können. Bei einer besonders vorteilhaften Ausführungsform ist das Kugelventil fremkörperfähig, d.h. ein eventuell zwischen den Kugelverschluß und den Ventilsitz eingefangener Festkörper führt über das elektro-mechanische Ansteuersystem zu einem Öffnungszyklus und damit zum Ausspülen des Fremdkörpers.

Im Folgenden werden anhand der beigefügtenl Zeichnungen Ausführungsbeispiele für einen Wassertisch nach der Erfindung näher erläutert.

In den Zeichnungen zeigen:
Fig. 1 in einer schematischen Darstellung in Seitenansicht einen Wassertisch für eine nichtdargestellte Plasma-Brennschneidmaschine;
Fig. 2 den Wassertisch nach Fig. 1 im Querschnitt;
Fig. 3 in einer stark vereinfachten perspektivischen Teildarstellung eine andere Ausführungsform für den Wasserbehälter eines Wassertisches;

Fig. 4 ein Teil des Wassertisches nach Fig. 1 in einer gegenüber Fig. 1 leicht vergrößerten Darstellung;
Fig. 5 bis 7 in einem Ausschnitt aus Fig. 4 den Hilfsbehälter des Wassertisches nach Fig. 1 und 4 bei verschiedenen Zuständen des Luftkissens;
Fig. 8 in einer perspektivischen Teildarstellung eine Ausführungsform eines Wassertisches mit anderer Anordnung des Luftkissens;
Fig. 9 in schematisierter Seitenansicht eine Luftzuführungsvorrichtung für den Wassertisch nach Fig. 5 bis 7;
Fig. 10 in einer stark schematisierten Prinzipdarstellung ein Auslaßventil an einer Schlammulde für einen Wassertisch nach Fig. 1 und 4 im geschlossenen Zustand;
Fig. 11 in einer Darstellung analog Fig. 10 das Auslaßventil im blockierten Zustand.

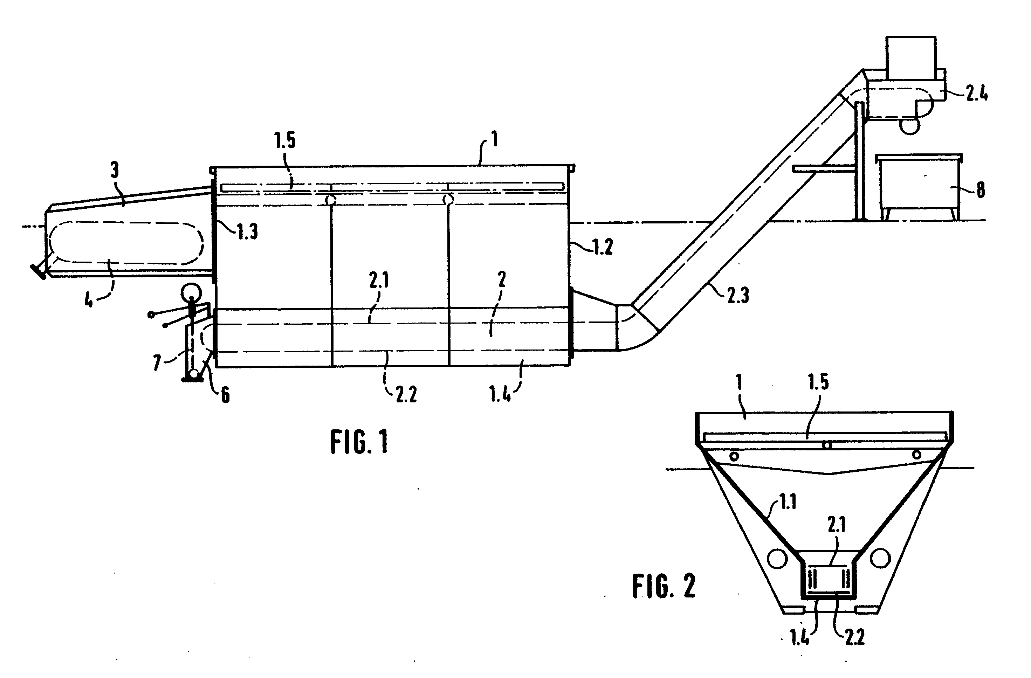

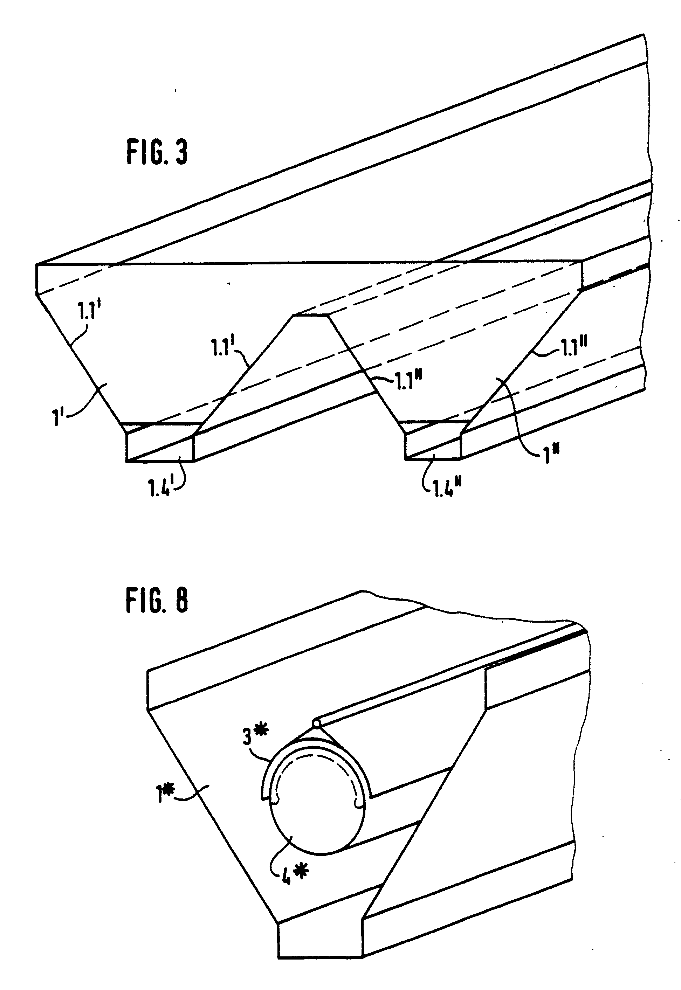

In den Fig. 1 und 2 sind die wichtigsten Teile eines Wassertisches für eine im übrigen nicht dargestellte Plasma-Brennschneidmaschine schematisch dargestellt. Er besitzt einen nach oben offenen Wasserbehälter 1, dessen in Längsrichtung verlaufende inneren Seitenwände 1.1 schräg nach innen abfallen, während die vordere Stirnwand 1.2 und die hintere Stirnwand 1.3 im wesentlichen senkrecht verlaufen. Die beiden schräg abfallenden Seitenwände 1.1 enden in einer am Boden des Wasserbehälters 1 angeordneten Förderrinne 1.4. Die Förderrinne selbst besitzt, wie beispielsweise aus Fig. 2 ersichtlich, senkrechte Seitenwände. Der ganze Behälter weist also im Querschnitt im wesentlichen V-Form auf. Es ist aber auch möglich, wie in Fig. 3 dargestellt, den Behälter als Doppelbehälter auszubilden, was dadurch erreicht wird, daß zwei Behälter, wie in Fig. 1 und 2 dargestellt, in Querrichtung nebeneinander angeordnet und in ihrem Oberteil miteinander verbunden sind, so daß, wie aus Fig. 3 zu ersehen, ein Behälter in W-Form entsteht, der aus den beiden Teilbehältern 1' und 1" aufgebaut ist, von denen jeder schräg nach innen abfallende Seitenwände 1.1' bzw. 1.1" und an seinem Boden eine Förderrinne 1.4' bzw. 1.4" aufweist.

Als Behältermaterial kann Stahlblech oder Kunststoff verwendet werden. Es ist aber ebenso möglich, die Behälter in Stahlbetonbauweise auszubilden. Die Winkel der schräg abfallenden Seitenwände werden in Abhängigkeit von den Reibungszahlen der verwendeten Materialkombinationen so ausgewählt, daß die beim Brennschneiden anfallenden Rückstände sicher und unverzüglich abwärts gleiten und sich am Behälterboden in der Förderrinne 1.4 bzw. den Förderrinnen 1.4' und 1.4" sammeln.

An der Oberseite des Behälters ist eine Schneidgutauflage 1.5 angeordnet, die im folgenden nicht näher beschrieben wird und beispielsweise aus gewalzten Flachprofilen aufgebaut sein kann.

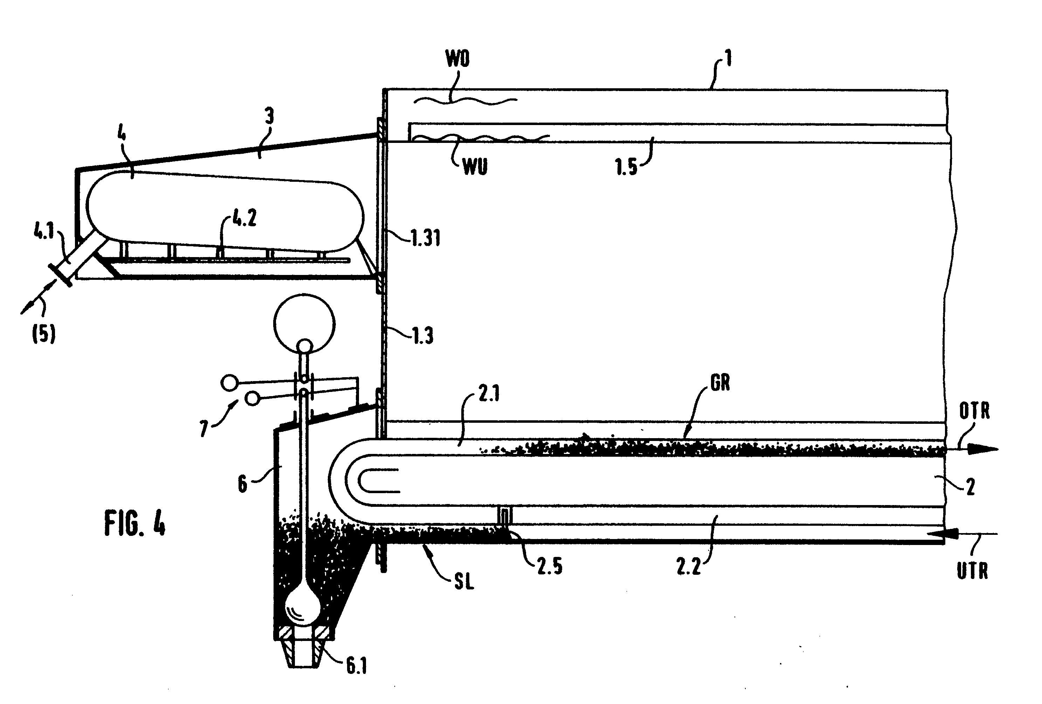

Innerhalb der Förderrinne 1.4 (1.4', 1.4") ist jeweils ein Plattenbandförderer 2 derart angeordnet, daß sein Obertrum 2.1 sich im wesentlichen über die Breite der Förderrinne 1.4 erstreckt und unmittelbar an die schräg abfallenden Seitenwände 1.1 anschließt, während sein Untertrum 2.2 dicht über dem Boden der Förderrinne 1.4 verläuft. Der Plattenbandförderer 2 durchläuft die Förderrinne 1.4 über ihre ganze Länge, ist dann in Bewegungsrichtung seines Obertrums 2.1 durch die vordere Stirnwand 1.2 nach außen geführt und verläuft von dort an in einem wasserdichten Tunnel 2.3 schräg nach oben zu seinem Abgabeende 2.4, das erhöht angeordnet ist und unter dem ein Granulatbehälter 8 angeordnet ist. An dem in Bewegungsrichtung des Untertrums 2.2 des Plattenbandförderers 2 liegende Ende der Förderrinne 1.4 ist eine vertiefte Schlammulde 6 angeordnet, die, wie weiter unten näher erläutert wird, einen Auslaß 6.1 besitzt, der durch ein Auslaßventil 7 verschließbar ist. Wie besonders gut aus Fig. 4 zu ersehen, besitzt der Plattenbandförderer 2 eine wichtige Doppelfunktion. Einerseits fördert er die sich auf seinem Obertrum 2.1 in der Förderrinne ansammelnden Metallgranulate GR und befördert sie in Richtung OTR bis sie schließlich in den Granulatbehälter 8 gelangen. Andererseits befördert das Untertrum 2.2 den sich am Boden der Förderrinne ansammelnden Schlamm SL in Richtung UTR, so daß er schließlich in die Schlammulde 6 gelangt. Diese Kratzförderung kann noch durch entsprechende am Plattenbandförderer angeordnete Förderelemente 2.5 unterstützt werden. Der Plattenbandförderer 2 dient also sowohl zur Trennung als auch zur Abführung der Schneidgutrückstände.

Die Steuerung des Antriebs des Plattenbandförderers 2 kann zweckmäßig mit einer "Wochenendschaltung" ausgerüstet sein. Dies bedeutet, daß bei Betriebsruhe oder ausgeschalteter Anlage der Plattenbandförderer nach Abgabe eines optischen Warnsignals im Drei-Stundentakt in Gang gesetzt und der jeweils aufgetauchte Förderbandteil zur Vermeidung von Zementierungseffekten in das im Wasserbehälter befindliche Wasser eingezogen wird.

Im Betrieb ist der Wasserbehälter 1 mit Wasser gefüllt und durch die nachfolgend beschriebene Einrichtung kann der Wasserspiegel von einer Höhe WU unterhalb der Schneidgutauflage 1.5 auf eine Höhe WO oberhalb der Schneidgutauflage 1.5 angehoben werden. Die Einrichtung zur Anhebung und Absenkung des Wasserspiegels ist in den Figuren 4 bis 7 genauer dargestellt. Das Unterwassersetzen des Schneidgutes auf der Schneidgutauflage 1.5 ist ein wesentlicher Bestandteil der Unterwasser-PlasmaSchneidtechnologie. Bei einer

Schneidgutauflagefläche von ca. 14 m$^2$ sind für das "Heben" und "Senken" des Wassers ca. 3 m$^3$ Wasser nebenzeitfreundlich zu verdrängen. Die in den Fig. 4 bis 7 dargestellte Einrichtung ist im Hinblick auf Energieaufwand und Grundflächenbeanspruchung besonders günstig ausgebildet. Sie besitzt ein aufblasbares Luftkissen 4 aus beckenwasserresistentem Material, das in bekannter Weise so gestaltet ist, daß im aufgeblähten Zustand die großflächig einander gegenüberliegenden Kissenflächen äquidistant verlaufen. Dabei ist eine reproduzierbare geometrische Form des Luftkissens gegeben und eine Unterbringung auf kleinstem Raum möglich. Das Luftkissen 4 ist innerhalb eines Hilfsbehälters 3 angeordnet, der an der hinteren Stirnwand 1.3 des Wasserbehälters 1 befestigt ist, und zwar so, daß sich sein Innenraum im wesantlichen unterhalb des unteren Wasserspiegels WO befindet, so daß der Hilfsbehälter 3 bei zusammengefallenem Luftkissen 4 vollständig mit Wasser gefüllt ist. Der Hilfsbehälter 3 ist allseitig, also auch an seiner Oberseite geschlossen und lediglich durch eine Durchlaßöffnung 1.31 mit dem Innenraum des Wasserbehälters 1 verbunden. Dies hat den Vorteil, daß bei der Ausdehnung des Luftkissens 4 keine nicht nutzbare Oberfläche des Wassers angehoben werden muß. Zur Erreichung einer Bewegungseleganz der im Wasserbehälter 1 auf- und absteigenden Wassermengen besitzt das Luftkissen 4 eine in Richtung auf den Wasserbehälter 1 abfallende Schrägstellung, die geeignet ist, bei Lufteinlaß das Wasser mit einer langsamen Rollbewegung von hinten zum Wasserbehälter 1 hin zu verdrängen. Die Schrägstellung pendelt sich durch unterschiedliche Längen der Auftriebshalteschlaufen der Halterung 4.2 des Luftkissens beim Verdrängungsvorgang automatisch ein.

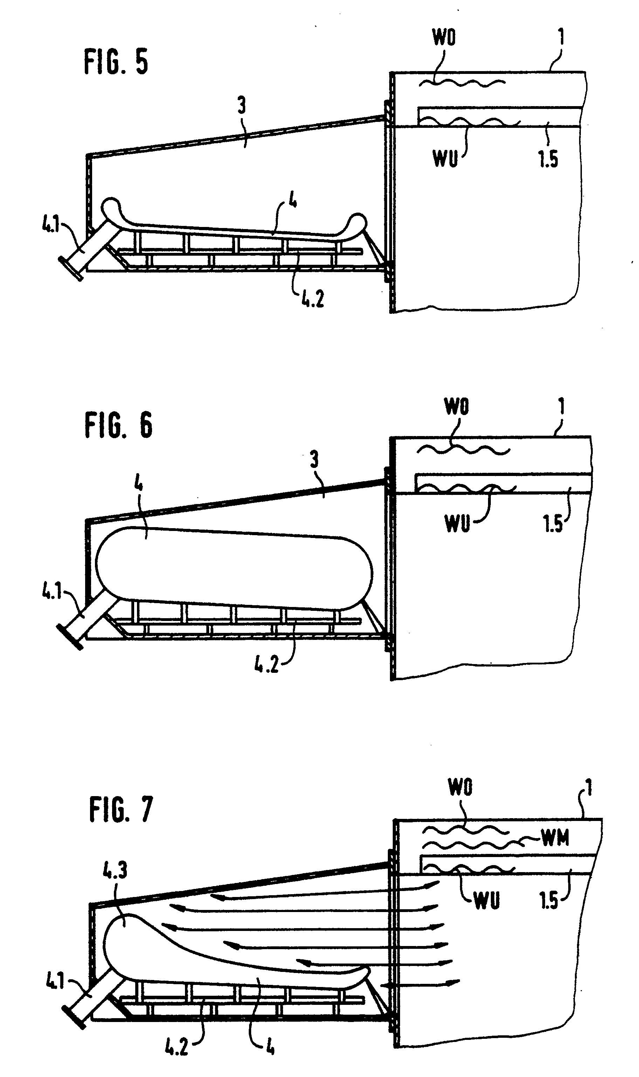

Die Vorgänge sind in den Fig. 5 bis 7 illustriert.

Fig. 5 zeigt den Zustand bei zusammengefallenem Luftkissen 4 und auf die Höhe WO abgesenktem Wasserspiegel in der Ruhelage. Nach dem Einströmen der Luft durch die Zuführungsleitung 4.1 hebt sich der Wasserspiegel wie in Fig. 6 dargestellt in die höchste Stellung WO. In Fig. 7 ist eine Zwischenstellung dargestellt, in der das Luftkissen nur teilweise aufgeblasen und somit der Wasserspiegel nur bis zu einer mittleren Höhe WM angehoben ist. In diesem Zustand sammelt sich aufgrund der besonderen Ausgestaltung und Anordnung des Luftkissens 4 die Luft vor allem im hinteren Teil 4.3 des Luftkissens 4.

Die Anordnung des Luftkissens 4 im Nebenbehälter 3 hat außerdem den Vorteil, daß das Luftkissen 4 gegen die herabgleitenden oder herabfallenden grobkörnigeren Schneidrückstände geschützt ist.

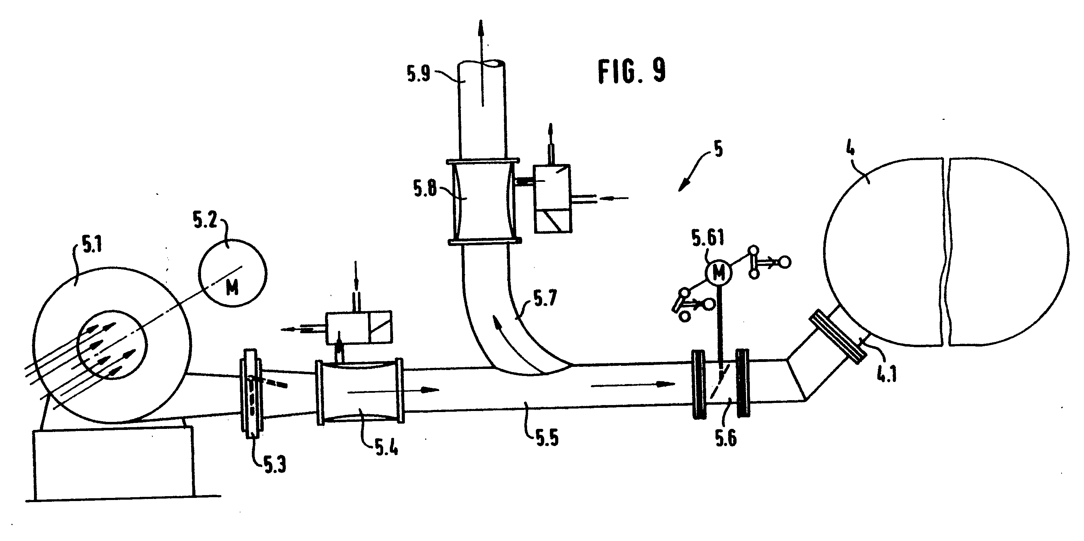

Selbstverständlich ist es auch möglich, das Luftkissen in anderer Weise anzuordnen. In Fig. 8 ist eine derartige Möglichkeit angedeutet, die vor allem dann sinnvoll sein kann, wenn sehr große nutzbare Schneidflächen erreicht werden sollen. Bei der in Fig. 8 angedeuteten Ausführungsform ist ein langgestrecktes Luftkissen 4* in Längsrichtung innerhalb des Wasserbehälters 1* selbst angeordnet. An seiner Oberseite ist das Luftkissen 4* durch eine Schutzvorrichtung 3* gegen herabfallende Schneidrückstände geschützt.

Die Luftzuführung zum Luftkissen 4 erfolgt mit einer in Fig. 9 näher dargestellten Einrichtung 5.

Wegen des kurzzeitigen Großbedarfs an Druckluft mit hohem Volumenstrom bei niedrigem Druck und aus Sicherheitsgründen wird die Füllluft für das Luftkissen 4 nicht dem üblichen Druckluftnetz entnommen, sondern mittels eines speziell ausgelegten Windverdichters erzeugt.

Der Windverdichter 5.1 enthält einen durch einen Motor 5.2 angetriebenen Radialventilator und sein Auslaß ist über eine einen Wassereinbruch verhindernde Rückschlagklappe 5.3 sowie ein erstes handelsübliches servogesteuertes Schlauchventil 5.4 und eine über einen Motor 5.61 einstellbare Drossel 5.6 mit der Einlaßleitung 4.1 des Luftkissens 4 verbunden. In das Leitungsstück 5.5 zwischen dem ersten Schlauchventil 5.4 und der Drossel 5.6 mündet eine Zweigleitung 5.7 ein, die über ein zweites servogesteuertes Schlauchventil 5.8 mit einem Luftauslaß 5.9 verbunden ist.

Die Verwendung der servogesteuerten Schlauchventile 5.4 und 5.8 hat den Vorteil, daß sie stromlos und strömungs günstig öffnen und korrosionsbeständig sind. Die motorgesteuerte Drossel 5.6 ermöglicht es, den Volumenstrom voreinzustellen, so daß beispielsweise zu schneidende Dünnbleche beim Wasseranheben nicht ihre notwendige Position durch Aufschwimmen verlieren. Am nicht dargestellten Bedienungspult der Anlage wird über einen Windrosenschalter das Heben und Senken des Wasserpegels von Hand durchgeführt. Der Bediener hat darüber hinaus die Möglichkeit, Automatikbetrieb vorzuwählen. Mit Hilfe einer elektronischen Zeiteinstellung läuft dann der Winderzeuger nach Antippen der Schalterstellung HEBEN analog zur Zeitvorwahl und automatisch solange, bis die zu einer bestimmten Blechdicke notwendige Höhe des Wasserspiegels erreicht ist. Die elektrische Schaltung der Schlauchventile kann so ausgelegt werden, daß bei Erhöhung des Wasserspiegels aus dem Zustand einer partiellen Anhebung (Fig. 7) kein durch den noch anlaufenden Ventilator bedingter lästiger Druckeinbruch entsteht (Nicken des Wasserspiegels).

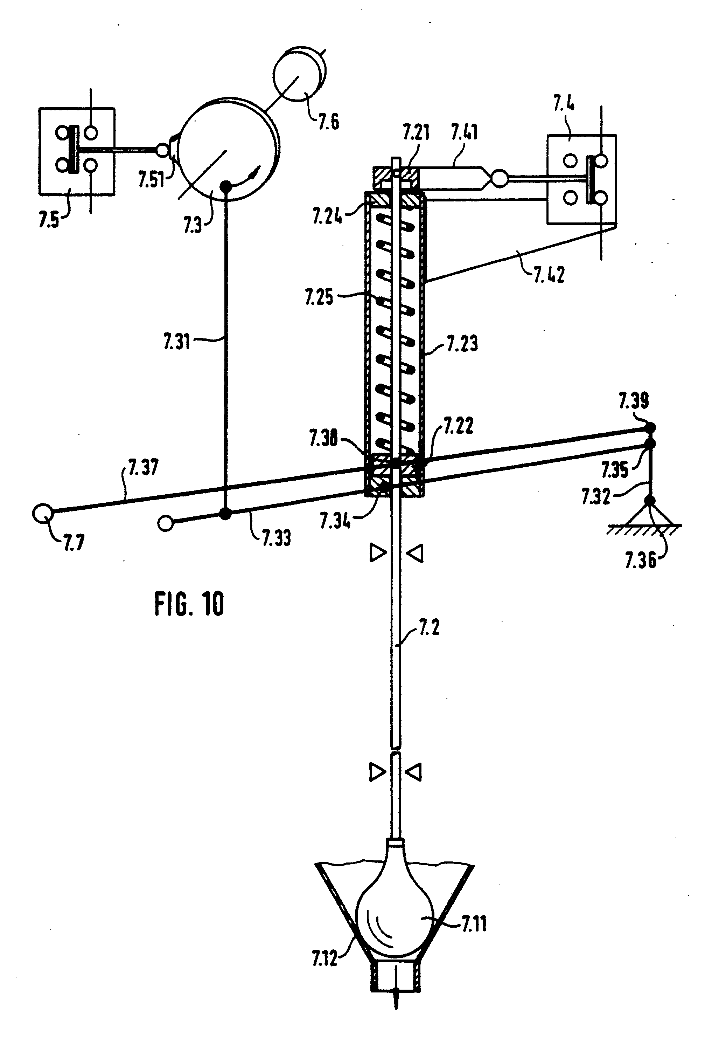

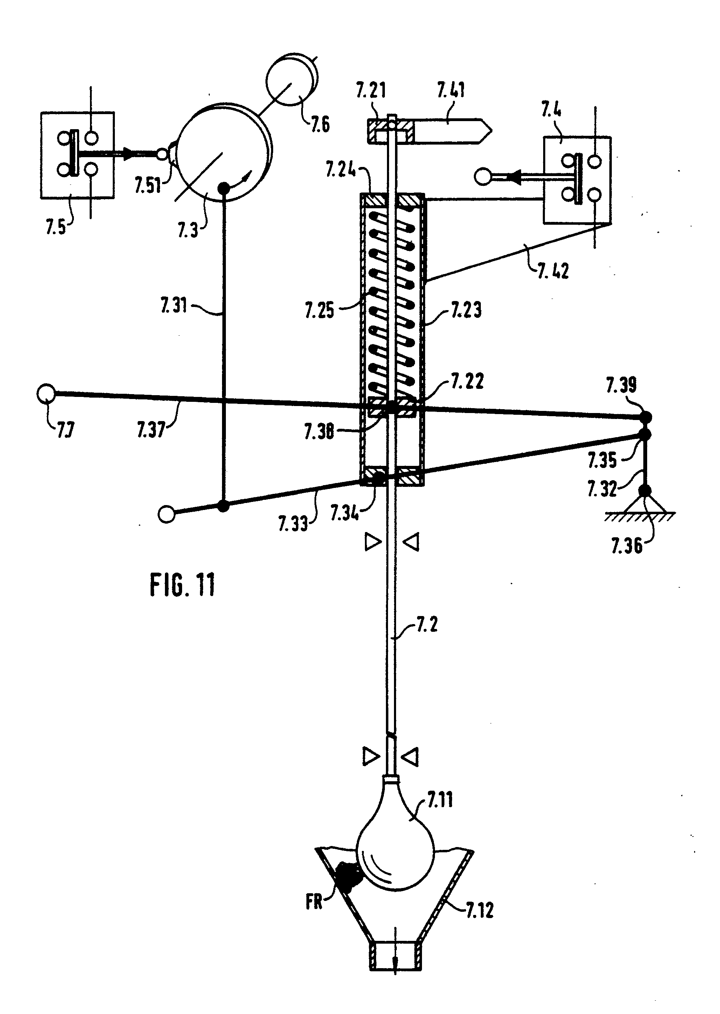

Der sich in der Schlammulde 6 ansammelnde Schlamm muß von Zeit zu Zeit schwallentleert werden. Dies geschieht über ein zeitgesteuertes Auslaßventil 7, das in den Fig. 10 und 11 näher dargestellt ist.

Um einen sicheren Schlammablaß zu erreichen, wurde ein speziell für Oxidschlämme geeignetes Kugelventil entwickelt. Der auf einem im Auslaß 6.1 angeordneten Ventilsitz 7.12 aufsitzende Kugelverschluß 7.11 ist über einen Ventilstößel 7.2 mit einem motorisch angetriebenen Kurbeltrieb zum zeitgesteuerten zyklischen Öffnen und Schließen des Kugelventils verbunden. Hierzu ist der Ventilstößel 7.2 koaxial durch eine rohrförmige Schiebemuffe 7.23 geführt, die an ihrem oberen Ende einen Anschlag 7.24 aufweist, der das obere Ende des Ventilstößels 7.2 über einen mit diesem fest verbundenen Gegenanschlag 7.21 trägt. Das untere Ende der Schiebemuffe 7.23 ist über ein Gelenk 7.34 mit einer ersten Gelenkkoppel verbunden, die aus zwei Gliedern 7.33 und 7.32 mit den Gelenkpunkten 7.35 und 7.36 besteht und über eine Schubstange 7.31 gelenkig mit einem Kurbeltrieb 7.3 verbunden ist, der durch einen Motor 7.6 angetrieben wird. Der Ventilstößel 7.2 ist innerhalb der Schiebemuffe 7.23 gegen die Kraft einer Schraubenfeder in Öffnungsrichtung des Kugelverschlusses 7.11 verschiebbar. Die Schraubenfeder 7.25 stützt sich einerseits an dem fest mit der Schiebemuffe 7.23 verbundenen Anschlag 7.24 und andererseits an einem fest mit dem Ventilstößel 7.2 verbundenen Anschlag 7.22 ab. Der Ventilstößel 7.2 ist über ein Gelenk 7.38 mit einer zweiten Gelenkkoppel verbunden, die aus den Gliedern 7.37 und 7.32 sowie den Gelenken 7.39 und 7.36 besteht. Am Glied 7.37 ist ein Handhebel 7.7 befestigt. Dem Ventilstößel 7.2 ist weiterhin ein Endschalter 7.4 zugeordnet, der über eine Halterung 7.42 fest mit der Schiebemuffe 7.23 verbunden ist. Der Endschalter 7.4 wird über einen am oberen Ende des Ventilstößels 7.2 angeordneten Schaltnocken 7.41 betätigt. Ein zweiter Endschalter 7.5 ist im Kurbeltrieb 7.3 zugeordnet und wird durch einen an diesem angeordneten Schaltnocken 7.51 betätigt. Die Funktionsweise des Ventils ist aus Fig. 10 unmittelbar abzulesen. Der Antriebsmotor 7.6 für den Kurbeltrieb 7.3 wird durch eine nicht genauer dargestellte elektrische Steuervorrichtung in einer Zeitsteuerung ein- und ausgeschaltet. In Fig. 10 ist die Schließstellung des Ventils dargestellt. Durch Betätigung des Kurbeltriebs 7.3 wird über die Schiebemuffe 7.23 und den Anschlag 7.21 der Ventilstößel 7.2 angehoben und damit der Kugelverschluß 7.11 geöffnet. Nach einer vollen Umdrehung des Kurbeltriebs 7.3 ist das Ventil wieder geschlossen. Die Endposition des Kurbeltriebs wird über den Endschalter 7.5 abgefühlt. Durch Hubverstellung am Kurbelzapfen des Kurbeltriebs 7.3 kann die Ablaßdosis eingestellt werden. Über den Handhebel 7.7 kann außerdem das Ventil von Hand geöffnet werden. Wie aus Fig. 11 zu entnehmen, reagiert das Kugelventil aber auch direkt auf zwischen Kugelverschluß 7.11 und Ventilsitz 7.12 eingeklemmte Fremdkörper FR. In diesem Fall wird der Ventilstößel 7.2 gegen die Schiebemuffe 7.23 und die Kraft der Feder 7.25 verschoben, was zur Folge hat, daß über den Schaltnocken 7.41 der Endschalter 7.4 betätigt wird, der über die nicht dargestellte elektrische Steuereinrichtung einen Betätigungszyklus durch den Kurbeltrieb 7.3 einleitet. Durch ein nicht dargestelltes Sichtfenster kann die Wirksamkeit des Ablaßvorganges jederzeit beobachtet werden.

Der über das Auslaßventil 7 aus der Schlammulde 6 abgeführte Schlamm kann über eine Membranpumpe einem Schlammeindickbehälter zugeführt werden.

**Ansprüche**

1. Wassertisch für Brennschneidmaschine mit UnterwasserPlasmaschneidanlage, insbesondere für Aluminium-Verarbeitung, mit einer in einem Wasserbehälter angeordneten Schneidgutauflage sowie einer Einrichtung zum Anheben und Absenken des Wasserspiegels, gekennzeichnet durch folgende Merkmale:
   a) Die in Längsrichtung verlaufenden inneren Seitenwände (1.1) des Wasserbehälters (1) sind unterhalb der Schneidgutauflage (1.5) schräg nach innen abfallend ausgebildet;
   b) am Boden des Wasserbehälters (1) verläuft in Längsrichtung eine Förderrinne (1.4), in der ein plattenbandförderer (2) angeordnet ist;
   c) der Plattenbandförderer (2) ist in Bewegungsrichtung seines Obertrums (2.1) durch die vordere Stirnwand (1.2) des Wasserbehälters (1) nach außen und dort in einem wasserdichten Tunnel (2.3) schräg nach oben zu einer Abnahmevorrichtung (2.48) für Schneidrückstände geführt;
   d) an dem in Bewegungsrichtung des Untertrums (2.2) des Plattenbandförderers (2) liegenden Ende der Förderrinne (1.4) ist eine unterhalb der Förderrinne liegende Schlammulde (6) angeordnet;
   e) die Einrichtung zum Anheben und Absenken des Wasserspiegels besitzt ein in einem unterhalb des Wasserspiegels liegenden Teilraum (3) des Wasserbehälters (1) angeordnetes aufblasbares Luftkissen (4), das an eine außerhalb des Wasserbehälters (1) angeordnete Luftzuführungsvorrichtung (5) angeschlossen ist.

2. Wassertisch nach Anspruch 1, dadurch gekennzeichnet,
daß das Luftkissen (4*) im Innenraum des Wasserbehälters (1*) selbst sich in Längsrichtung erstreckend unterhalb einer Schutzvorrichtung (3*) angeordnet ist.

3. Wassertisch nach Anspruch 1, dadurch gekennzeichnet,
daß das Luftkissen (4) in einem an einer Stirnwand (1.3) des Wasserbehälters (1) befestigten Hilfsbehälter (3) angeordnet ist, dessen Innenraum im wesentlichen unterhalb des Wasserspiegels liegt und mit dem Innenraum des Wasserbehälters (1) verbunden ist.

4. Wassertisch nach Anspruch 3, dadurch gekennzeichnet,
daß der Hilfsbehälter (3) bis auf eine in der Stirnwand (1.3) des Wasserbehälters (1) liegende Wasserdurchtrittsöffnung (1.31) allseitig geschlossen und sich in Richtung auf den Wasserbehälter (1) trichterförmig erweiternd ausgebildet ist.

5. Wassertisch nach Anspruch 4, dadurch gekennzeichnet,
daß das Luftkissen (4) im Hilfsbehälter (3) in Richtung auf den Wasserbehälter abfallend geneigt angeordnet ist.

6. Wassertisch nach einem der Ansprüche 2 bis 5, dadurch gekennzeichnet, daß die Luftzuführungsvorrichtung (5) einen Windverdichter (5.1) aufweist, der über eine Leitung (5.5) mit dem Luftkissen (4) verbunden ist, welche eine Rückschlagklappe (5.3), ein erstes steuerbares Schlauchventil (5.4), sowie eine einstellbare Drosselvorrichtung (5.6) enthält, wobei zwischen dem ersten Schlauchventil (5.4) und der Drosselvorrichtung (5.6) eine über ein zweites steuerbares Schlauchventil (5.8) mit einem Luftauslaß (5.9) verbundene Zweigleitung (5.7) angeschlossen ist.

7. Wassertisch nach einem der Ansprüche 1 bis 6, dadurch gekennzeichnet, daß der Plattenbandförderer (2) in der Förderrinne (1.4) derart angeordnet ist, daß sein die Breite der Förderrinne (1.4) im wesentlichen ausfüllendes Obertrum (2.1) unmittelbar unterhalb des unteren Endes der schräg abfallenden Seitenwände (1.1) liegt, während sein Untertrum (2.2) dem Boden der Förderrinne (1.4) unmittelbar gegenüberliegt.

8. Wassertisch nach einem der Ansprüche 1 bis 7, dadurch gekennzeichnet, daß am tiefsten Punkt der Schlammulde (6) eine Auslaßöffnung (6.1) angeordnet ist, an welche sich eine Schlammabführungsleitung anschließt und in der Auslaßöffnung (6.1) ein als Kugelventil ausgebildetes zeitgesteuertes Auslaßventil (7) angeordnet ist.

9. Wassertisch nach Anspruch 8, dadurch gekennzeichnet,
daß der Kugelverschluß (7.11) des Kugelventils (7) über einen Ventilstößel (7.2) mit einem motorgetriebenen Kurbeltrieb (7.3) zum zeitgesteuerten zyklischen Öffnen und Schließen des Kugelventils (7) verbunden ist.

10. Wassertisch nach Anspruch 9, dadurch gekennzeichnet,
daß der Ventilstößel (7.2) koaxial durch eine rohrförmige Schiebemuffe (7.23) geführt ist, an deren einem Ende (7.34) der Kurbeltrieb (7.3) angreift, während ihr anderes Ende (7.24) an einem fest am freien Ende des Ventilstößels (7.2) angeordneten Anschlag (7.21) anliegt und der Ventilstößel (7.2) gegenüber der Schiebemuffe (7.23) in Öffnungsrichtung des Kugelventils gegen die Kraft einer in der Schiebemuffe (7.23) angeordneten Schraubenfeder (7.25) verschiebbar ist und dem Ventilstößel (7.2) ein bei seiner Verschiebung gegenüber der Schiebemuffe (2.31) ein elektrisches Öffnungssignal auslösender Endschalter (7.4) zugeordnet ist, der TeiL einer Steuerschaltung ist, durch welche auf das Öffnungssignal hin ein Öffnungs-Schließzyklus des Kugelventils über den motorgetriebenen Kurbeltrieb( (7.3) eingeleitet wird.

11. Wassertisch nach Anspruch 10, dadurch gekennzeichnet,
daß der Ventilstößel (7.2) unmittelbar mit einem Handhebel (7.37) zum Notöffnen des Kugelventils verbunden ist.

12. Wassertisch nach einem der Ansprüche 1 bis 11, dadurch gekennzeichnet, daß der Wasserbehälter als Mehrfachbehälter aus mehreren in Querrichtung nebeneinander angeordneten Einzelbehältern (1', 1'') ausgebildet ist, wobei jeder der Einzelbehälter schräg nach innen abfallende Seitenwände (1.1', 1.1''), sowie eine Förderrinne (1.4', 1.4''), in der ein Plattenförderer angeordnet ist, eine Schlammulde und eine Einrichtung zum Anheben und Absenken das Wasserspiegels aufweist.

FIG. 1

FIG. 2

FIG. 3

FIG. 8

FIG. 4

EP 0 428 841 A1

**FIG. 5**

**FIG. 6**

**FIG. 7**

FIG. 9

EP 0 428 841 A1

FIG. 10

FIG. 11

Europäisches
Patentamt

**EUROPÄISCHER
RECHERCHENBERICHT**

Nummer der Anmeldung

**EP 90 11 7235**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 230 448 (CATERPILLAR TRACTOR) <br> * Seite 2, Zeile 36 - Seite 6, Zeile 35; Figuren 1-3 * <br> – – – | 1 | B 23 K <br> 7/00 <br> B 23 K 7/10 |
| A | US-A-4 453 702 (ANDERSON ET AL.) <br> * Spalte 2, Zeile 48 - Spalte 4, Zeile 30; Figuren 1-9 * <br> – – – | 1 | |
| P,A | DE-A-3 812 367 (OXYTECHNIK) <br> * Spalte 5, Zeilen 3 - 37; Figur 2 * <br> – – – – – | 1 | |
| | | | **RECHERCHIERTE SACHGEBIETE (Int. Cl.5)** <br><br> B 23 K |

Der vorliegende Recherchenbericht wurde für alle Patentansprüche erstellt

| Recherchenort | Abschlußdatum der Recherche | Prüfer |
|---|---|---|
| Den Haag | 07 Februar 91 | DEMOLDER J. |